# EUROPEAN PATENT SPECIFICATION

(11) **EP 1 446 963 B1**
(45) Date of publication and mention of the grant of the patent: **28.10.2009**
(21) Application number: 02787701.8
(22) Date of filing: 15.11.2002
(51) Int. Cl.: H04W 64/00

(54) **VELOCITY HANDLING IN LOCATION SERVICES (LSC)**
GESCHWINDIGKEITSBEHANDLUNG IN LOKALISIERUNGSDIENSTE
GESTION DE LA VITESSE DANS DES SERVICES DE LOCALISATION (LCS)

(30) Priority: 21.11.2001 EP 01830721
(43) Date of publication of application: 18.08.2004
(73) Proprietor: TELEFONAKTIEBOLAGET LM ERICSSON (publ), 164 83 Stockholm (SE)
(72) Inventor: LALA, Alessandro, I-80125 Napoli (IT); DE LUCA, Enrico, I-81100 Caserta (IT); IOVIENO, Maurizio, I-84085 Mercato San Severino (SA) (IT)
(74) Representative: Tonscheidt, Andreas
(86) International application number: PCT/EP2002/012829
(87) International publication number: WO 2003/045075

(56) References cited:
- EP-A- 0 714 219
- WO-A-00/38466
- WO-A-01/74110
- JP-A- 11 298 945
- ETSI: "Digital cellular telecommunications system (Phase 2+) (GSM); Universal Mobile Telecommunications System (UMTS); Functional stage 2 description of location services (3GPP TS 23.271 version 4.3.0 Release 4)" ETSI TS 123 271 V4.3.0 (2001-10), October 2001 (2001-10), pages 1-70, XP002244468 France

## Description

### Field of the Invention

The invention relates to the provision of velocity information about a target subscriber in a network supporting Location Services (LCS).

### Background of the invention

Location services are defined for example in 3GPP (third Generation Partnership project) specifications TS22.071, version 3.2.0, published January 2000. In general, location services deliver a service that is related to the location of user equipment. To provide a location service, a service provider depends on the knowledge of the location of user equipment.

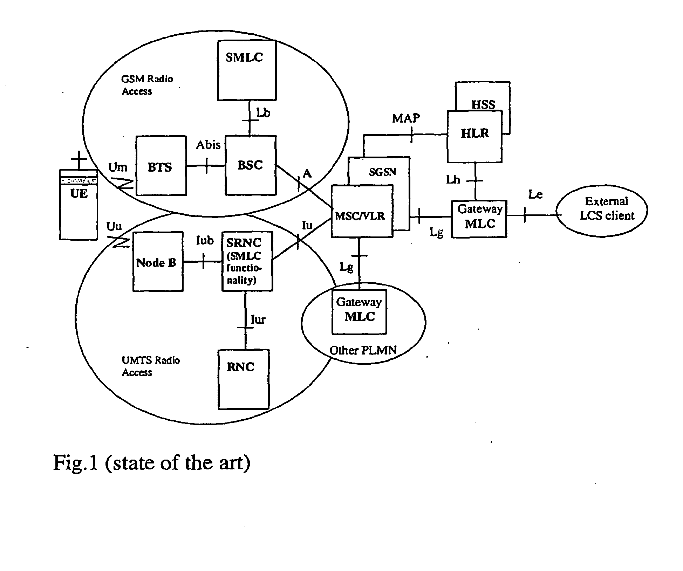

Figure 1 depicts the architectures standardised in 3GPP TS 23.271, version 5.0.0, published October 2001. The architecture comprises two Gateway Mobile Location centres GMLC1, GMLC2, connected to core network nodes MSC, SGSN. One of the gateway mobile location centres GMSC1 is connected to an external location service client LCSC, to a home location server and a home subscriber server HSS. The other gateway mobile location centre GMSC2 is connected to an external public land mobile network PLNM. The control nodes MSC, SGSN are connected to the home location server and a home subscriber server HSS, as well as to a radio access network UMTS (Universal Mobile Telecommunication System) Radio Access node SRNC and to the base station controller BSC. The radio access node is a radio network controller SRNC and is further connected to a node B Node B and a further radio network controller RNC. The node B Node B serves user equipment UE. The base station controller BSC is connected to a serving mobile location centre SMLC and to a base transceiver station BTS. The base transceiver station BTS serves user equipment UE.

The Gateway Mobile Location Centres GMLC1, GMLC2 contain functionality required to support location services. In one network, there may be more than one gateway mobile location centre.

The gateway mobile location centre is the first node an external location services client accesses in a mobile network. The gateway mobile location centre GMLC1 may request routing information from the home location register HLR or home subscriber server HSS. After performing registration authorisation, it sends positioning requests to mobile services switching centre MSC or serving GPRS (General Packet Radio Service) support node SGSN and receives final location estimates from the corresponding entity.

The home location register HLR and the home subscriber server HSS contains location services subscription data and routing information. For a roaming mobile subscriber, home location register HLR and home subscriber server HSS may be in a different mobile network from the one he is currently roaming into. The location services subscription data are transferred from the home location register HLR or the home subscriber server HSS to the mobile services switching centre MSC or the serving GPRS support node SGSN during the location update procedure.

The mobile services switching centre MSC and the serving GPRS support node SGSN contain the functionality responsible for the user's location services subscription and privacy. The location services functions of mobile services switching centre MSC and serving GPRS support node SGSN are also related to charging and billing, location services co-ordination of all location requests, authorisation and authentication of the positioning requests received from the gateway mobile location centre GMLC1, GMLC2.

The location services system provides the opportunity of requesting the location of the mobile user terminals from an external location services client, a so-called Mobile Terminating Location Request MT-LR, the location from the terminal itself, a so-called Mobile Originating Location Request MO-LR, and the auto-induced location from the network, a so-called Network Induced Location Request NI-LR.

Japanese patent application JP 11 298945 discloses a way of determining a velocity of a subscriber by performing Doppler shift calculations in a base station. However, Doppler shift calculations are cumbersome, require additional equipment and are not accurate.

The PCT application WO 01 74110 stipulates that by determining the positioning of a mobile station two or more times during a known time interval the speed and heading of the mobile is readily calculable to that end, a velocity determiner is located together with a GPS receiver circuitry in a mobile station. However, this document does not disclose how the velocity of a mobile station can be determined within a network.

Therefore it is object of the invention to provide a method for the determination of velocity information within a network.

### Brief description of the invention

If a requesting entity is interested to know the velocity of a target subscriber, it has to perform several (at least two) location requests, and calculate the velocity using the location estimates and time stamps obtained as result of the location procedures. The drawback of this solution is the useless signalling needed to obtain velocity information: two location service requests to have the velocity. Moreover, in the current technology, the mobile services switching centre serving GPRS support node provides the gateway mobile location centre "timing" results expressed as "age of location": in case the "current location" is requested the "age of location" is "0"; the gateway mobile location centre or the location services client itself then can "time stamp" the received location information, according to an internal clock. The drawback of this solution is that the accuracy in time stamping is affected by the signalling delays in the network, so that a velocity calculation performed in the gateway mobile location centre or in the location services client cannot be accurate. The same problem occurs in case the user equipment wants to have information concerning its own velocity (MO-LR), and in case the network itself wants to have such information (NI-LR).

The invention can be applied to both GSM and UMTS accesses and to both circuit switched and packer switched domains.

The basic idea of this invention is to provide an external location services client (MT-LR), the user equipment (MO-LR) and the network itself (NI-LR) the possibility to get velocity information of a target subscriber using Location Services (LCS). This invention introduces the solution that the velocity measurement/calculation is performed in the Radio Access Network, which already in the existing technology is able to provide the location estimate and keeps internal accurate timing information, used for other purposes.

The calculation and collection of location data for calculation can be performed for example by the serving mobile location function. Said function may be located in the serving radio network controller or may be working together with a base station controller BSC, as depicted in figure 1. The serving mobile location function performs the velocity calculation, after that two location estimates are available. It should be noted that in that case absolute time stamping is not necessary. It is sufficient to have an accurate estimate of the time difference between the two location estimates.

As relative time information is available in radio access network nodes this is a further reason to locate and perform the velocity calculation in a radio access network. The data can be sent to the core network, for example the mobile services switching centre or a serving GPRS support node according to the format specified in the 3GPP UMTS specification TS 23.032 for velocity.

A radio access network going to determine a velocity information of a user equipment by means of a location service, wherein the calculation is performed by a said radio access network executes the steps of determining a first location of the user equipment, determining a second location of the user equipment, determining the time difference between the determination of the first and the determination of the second location, and determining the velocity of the user equipment based on the first location, the second location and the time difference. The determining of the first and of the second location can be performed in different, nodes of the radio access network. A radio access node performing the method can be for example a radio network controller or a base station controller. The invention is further related to a radio access network node that is adapted to determine a velocity of a user equipment. To that end, the radio access network node comprising means for determining a first position of a user equipment, means for determining a second position of the user equipment. Furthermore it comprises means for determining the time difference between the determination of the fist and the determination of the second location and means for determining the velocity of the user equipment based on the first location, the second location and the time difference.

### Brief description of the drawings

Fig. 1 depicts a network for providing location services,
Fig. 2 depicts an embodiment of the invention for a mobile terminating location service request,
Fig. 3 depicts a further embodiment of the invention for a mobile originating locatin request, and
Fig. 4 depicts an embodiment of the invention for a network induced location request.

### Detailed description of the invention

The signals used in the description and the sequences depicted are explained in more detail in the 3GPP TS 23.271, version 5.0.0. The signals: Provide Subscriber Location (velocity request), Location Services Invoke (velocity request), Location Request (velocity request), Location Report (velocity result), Provide Subscriber Location ack (velocity result), MAP (Mobile Application Part) Subscriber Location Report (velocity result), LCS (Location Services) MO-LR Return Result (velocity result), and LCS Service Response (Velocity result) differ from the known signals in the respect that they are adapted to support velocity information. Therefore the request messages can, for example, comprise an indicator that identifies the request as a request for velocity instead of, or in addition to, location. The result messages comprise an information about the speed of the user equipment UE. The format for the velocity information may differ from the format used for location information.

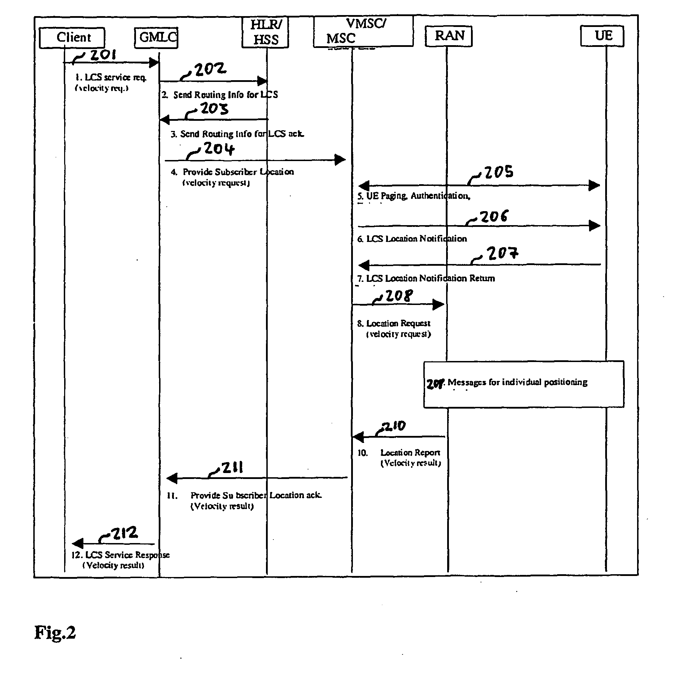

Figure 2 depicts the procedure according to the invention for the case that an external client requests velocity information. In said figure it is not distinguished between the solution for a request handled by a mobile services switching centre or a serving GPRS support node, as the procedure is equal for both.

In case of MT-LR, the location services client Client sends in a first step 201 a request for location services for a user UE, for example by sending a LCS Service Request message, to a gateway mobile location centre GMLC. The client Client specifies in the location services Service request message that he is interested to know the velocity of the target UE. The gateway mobile location centre GMLC requests routing information for the location service from a home location register HLR or a home subscriber server HSS in a next step 202. The home location register HLR or respectively the home subscriber server HSS returns the requested information in a next step 203. Afterwards, the gateway mobile location centre GMLC forwards the request for location services to a mobile services switching centre MSC or serving GPRS support node , for example by means of MAP (Mobile Application Part) Provide Subscriber Location message in a following step 204. The MAP Provide Subscriber Location message includes a parameter indicating that the request is for velocity. In step 205, if necessary, the mobile services switching centre MSC pages the user equipment and executes respective authentication procedures. After successful paging, the mobile services switching centre MSC sends a location notification for example by sending a LCS Location Notification message, to the user equipment in step 206. The user equipment acknowledges that for example by returning a LCS Location Notification message in step 207. If privacy checks are successfully performed, the mobile services switching centre MSC or a serving GPRS support node sends a Location Request to the Radio Access Network RAN in step 208, specifying that the request is for velocity. The radio access network RAN performs the velocity calculation in step 209. In a succeeding step 210 the result of velocity calculation is sent from radio access network RAN to the mobile services switching centre MSC for example by means of sending a Location Report message and the velocity information is then forwarded to the gateway mobile location centre GMLC by means of MAP Provide Subscriber Location ack message in step 211 and to the location services client Client by means of for example sending a LCS Service Response message in step 212.

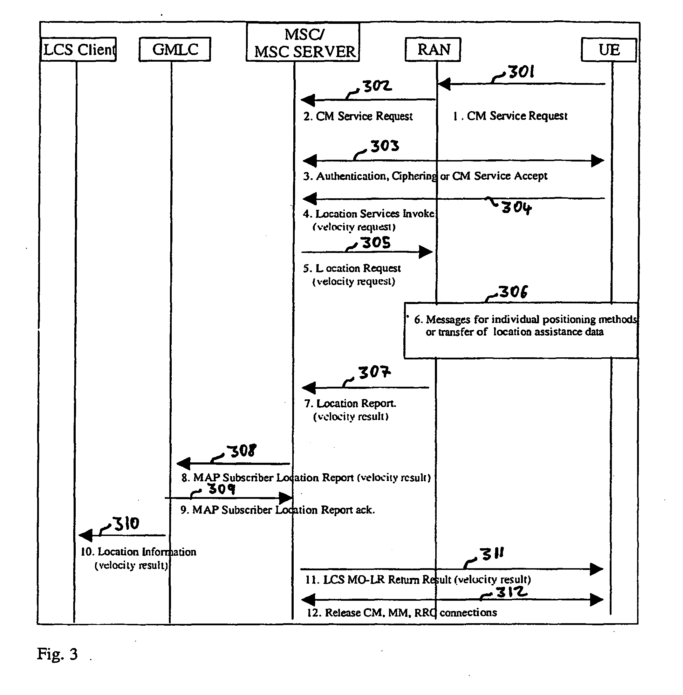

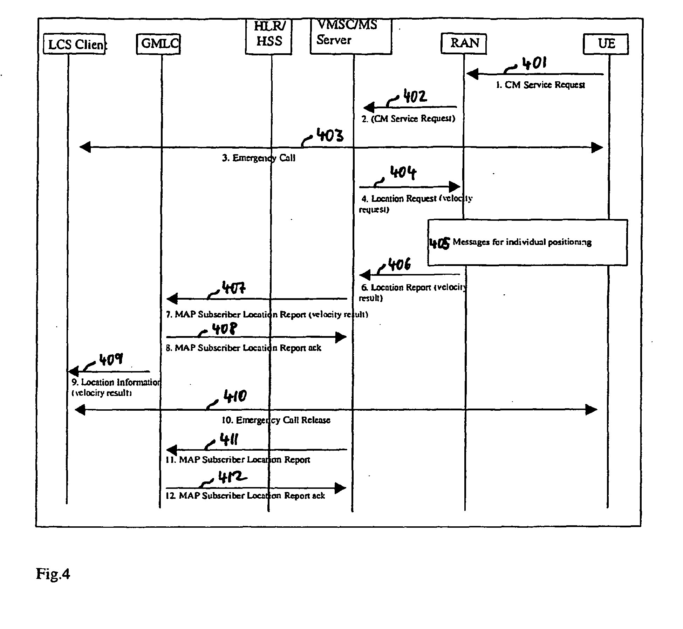

Fig.3 and fig. 4 show how the request for velocity is performed and how the results are sent according to the request, in case respectively of MO-LR (Mobile Originating Location Request) and NI-LR (Network induced Location Request).

In step 301 the user equipment UE attaches for example by sending a CM Service Request message to the radio access network RAN. The radio access network RAN forwards the request to a serving core network node as a serving GPRS support node or a mobile services switching centre or a mobile services switching centre server. In the depicted example it is forwarded in step 302 in a CM Service Request message to a mobile services switching centre MSC/MSC SERVER. If necessary, the mobile services switching centre MSC/MSC SERVER performs authentication, ciphering procedures or responds with a CM Service Response in step 303. After attaching, the user equipment invokes location services in step 304 for example by sending a Location Services Invoke message, comprising an indication that information about the velocity is requested to the mobile services switching centre MSC/MSC SERVER. The mobile services switching centre MSC/MSC SERVER sends initiates in steop 305 the calculation of the requested information from the radio access network RAN e.g. by sending a Location Request message comprising an indication that a velocity information for the user is requested. In step 306 the radio access network RAN performs the positioning, wherein the velocity may be determined by a analysing change of user's position over time. The radio access network RAN sends the result of the positioning comprising an information about the calculated velocity to the mobile services switching centre MSC/MSC SERVER in step 307. for example by sending a location report message. The mobile services switching centre MSC/MSC SERVER forwards the result to a gateway mobile location centre GMLC in a next step 308, e.g. by sending a MAP (Mobile Application Part) Subscriber Location Report message. After reception of the message the gateway mobile location centre GMLC can respond for instance by sending a MAP Subscriber Location Report Acknowledgement message. The gateway mobile location centre GMLC forwards the result of the positioning including the information about the velocity to a location services client LCS Client in a step 310 for example in a Location Information message.

Figure 4 depicts a location request that is network induced because of an emergency called of a user. In a first step 401 the user equipment UE sends a CM service request message comprising an indicator that an emergency call is requested to a radio access network RAN. The radio access network forwards the CM service request to a core network node, in the depicted embodiment to a visited mobile services switching centre VMSC/MS Server. In a next step 403 the emergency call is set up to an emergency centre LCS Client. The mobile services switching centre VMSC/MS Server initiates a location request because of the emergency nature of the call in a step 404 for example by sending a location request message to the radio network RAN. the location request message comprises an indication that velocity information for the user is requested. The radio network RAN executes positioning methods in a step 405. The result of the positioning is forwarded to the mobile services switching centre VMSC/MS Server in a next step 406 e.g. by sending a location report message comprising the requested information about the velocity of the user. The mobile services switching centre VMSC/MS Server forwards the received information to a gateway mobile location centre GMLC in a next step 407 for instance by sending a MAP subscriber location report message. The gateway mobile location centre GMLC may return a MAP subscriber location acknowledgement in a next step 408. It forwards the received location information including the velocity information to the emergency centre LCS Client. In step 410 the emergency call is released. Afterwards a further MAP subscriber location report may be sent form the mobile services switching centre VMSC/MS Server in a step 411 that can be acknowledged by the gateway mobile location centre GMLC in a MAP subscriber location report message in a step 412.

The invention allows providing velocity information to the entity requesting Location Services, in an accurate way, without useless signalling.

The operator can have benefit in providing new location based services, by having accurate velocity information of the target subscriber. In case of emergency calls, the velocity of the target subscriber can be provided to the Emergency Service Centre.

## Claims

1. Method for the determination of velocity information of a user equipment by means of a location service **characterised in that** the calculation is performed by a radio access network executing the steps of:
• determining (209,306,405) a first location of the user equipment,
• determining (209,306,405) a second location of the user equipment,
• determining the time difference between the determination of the first and the determination of the second location, and
• determining the velocity of the user equipment based on the first location, the second location and the time difference.

2. Method according to claim 1, wherein the determining of the first and of the second location are performed in different nodes of the radio access network.

3. Method according to claim 1 or 2, wherein a radio access node is a radio network controller or a base station controller.

4. Method according to claim 1, 2 or 3, wherein the calculation performed by the radio acces network further comprises the steps of:
• receiving (301,401) from said user equipment a service request,
• receiving (305,404) from a core network node a location request comprising an indication that velocity information for the user is requested, and
• forwarding (307,406) the result of the positioning comprising the requested information about the velocity of the user towards said core network node.

5. Method according to claim 4, wherein said core network node is a visited mobile services switching centre VMSC/MS Server.

6. Method according to claim 4 or 5, wherein said service request received from said user equipment comprises an indicator that an emergency call is requested.

7. Radio access network node adapted to determine a velocity of a user equipment comprising
• means for determining a first position of the user equipment,
• means for determining a second position of the user equipment,
**characterised by**
• means for determining the time difference between the determination of the first and the determination of the second location and
• means for determining the velocity of the user equipment based on the first location, the second location and the time difference.

8. Radio access network node according to claim 7, further comprising
• means for receiving from a user equipment a service request, and
• means for receiving from a core network node a location request comprising an indication that velocity information for the user is requested.

9. Radio access network node according to claim 7 or 8, further comprising
• means for forwarding the result of the positioning comprising the requested information about the velocity of the user towards said core network node.

10. Radio access network node according to claim 7, 8 or 9, wherein said radio access node is a radio network controller or a base station controller.

## Patentansprüche

1. Verfahren für die Bestimmung von Geschwindigkeitsinformationen einer Teilnehmereinrichtung mittels eines Lokalisierungsdienstes, **dadurch gekennzeichnet, dass** die Berechnung durch ein Funkzugangsnetz durchgeführt wird, das die Schritte ausführt:
• Bestimmen (209, 306, 405) eines ersten Aufenthaltsorts der Teilnehmereinrichtung.
• Bestimmen (209, 306, 405) eines zweiten Aufenthaltsorts der Teilnehmereinrichtung,
• Bestimmen der Zeitdifferenz zwischen der Bestimmung des ersten und der Bestimmung des zweiten Aufenthaltsorts, und
• Bestimmen der Geschwindigkeit der Teilnehmereinrichtung basierend auf dem ersten Aufenthaltsort, dem zweiten Aufenthaltsort und der Zeitdifferenz.

2. Verfahren nach Anspruch 1, wobei das Bestimmen des ersten und des zweiten Aufenthaltsorts in verschiedenen Knoten des Funkzugangsnetzes durchgeführt wird.

3. Verfahren nach Anspruch 1, oder 2, wobei ein Funkzugangsknoten eine Funknetzsteuerung oder eine Basisstationssteuerung ist.

4. Verfahren nach Anspruch 1, oder 3, wobei die Berechnung durch ein Funkzugangsnetz ferner die Schritte aufweist:
• Empfangen (301, 401) einer Dienstanforderung von der Teilnehmereinrichtung
• Empfangen (305, 404) einer Lokalisierungsanforderung mit einem Hinweis, dass Geschwindigkeitsinformationen für den Teilnehmer angefordert werden, von einem Kernnetzknoten und
• Weiterleiten (307, 406) des Ergebnisses der Positionsbestimmung mit den angeforderten Informationen über die Geschwindigkeit des Teilnehmers an den Kernnetzknoten.

5. Verfahren nach Anspruch 4, wobei der Funkzugangssknoten ein Besucher-Mobildienstvermittlungsstellen- bzw. VMSC/MS-Server ist.

6. Verfahren nach einem der Ansprüche 4 oder 5, wobei die von der Teilnehmereinrichtung empfangene Dienstanforderung eine Anzeige, dass ein Notruf angefordert wird, aufweist.

7. Funkzugangsnetzknoten, der so ausgelegt ist, dass er eine Geschwindigkeit einer Teilnehmereinrichtung bestimmt und aufweist:
• Mittel zum Bestimmen einer ersten Position der Teilnehmereinrichtung,
• Mittel zum Bestimmen einer zweiten Position der Teilnehmereinrichtung,
**gekennzeichnet durch**
• Mittel zum Bestimmen der Zeitdifferenz zwischen der Bestimmung des ersten und der Bestimmung des zweiten Aufenthaltsorts und
• Mittel zum Bestimmen der Geschwindigkeit der Teilnehmereinrichtung basierend auf dem ersten Aufenthaltsort, dem zweiten Aufenthaltsort und der Zeitdifferenz.

8. Funkzugangsnetzknoten nach Anspruch 7, ferner aufweisend:
• Mittel zum Empfangen einer Dienstanforderung von einer Teilnehmereinrichtung, und
• Mittel zum Empfangen einer Lokalisierungsanforderung mit einem Hinweis, dass Geschwindigkeitsinformationen für den Teilnehmer angefordert werden, von einem Kernnetzknoten.

9. Funkzugangsnetzknoten nach Anspruch 7 oder 8, ferner aufweisend:
• Mittel zum Übermitteln des Ergebnisses der Positionsbestimmung mit den angeforderten Informationen über die Geschwindigkeit des Teilnehmers an den Kernnetzknoten.

10. Funkzugangsnetzknoten nach 7, 8 oder 9, wobei der Funkanschlussknoten eine Funknetzsteuerung oder eine Basisstationssteuerung ist.

## Revendications

1. Procédé de détermination d'une information de vitesse d'un équipement d'utilisateur au moyen d'un service de localisation, **caractérisé en ce que** le calcul est effectué par un réseau d'accès radio exécutant les étapes:
• déterminer (209,306,405) une première localisation de l'équipement d'utilisateur,
• déterminer (209,306,405) une seconde localisation de l'équipement d'utilisateur,
• déterminer la différence temporelle entre la détermination de la première localisation et la détermination de la seconde localisation, et
• déterminer la vitesse de l'équipement d'utilisateur sur la base de la première localisation, la seconde localisation et la différence temporelle.

2. Procédé selon la revendication 1, dans lequel la détermination de la première et la seconde localisation sont effectuées dans des noeuds différents du réseau d'accès radio.

3. Procédé selon une des revendications 1 ou 2, dans lequel un noeud d'accès radio est un contrôleur de réseau radio ou un contrôleur de station de base.

4. Procédé selon une des revendications 1, 2 ou 3, dans lequel le calcul effectué par un réseau d'accès comprenne en outre les étapes:
• recevoir (301,401) en provenance dudit équipement d'utilisateur une demande de service,
• recevoir (305,404) en provenance d'un réseau central, une demande de localisation comprenant une indication que l'information de vitesse de l'utilisateur est demandée, et
• acheminer (307,406) le résultat de la localisation comprenant information demandée concernant la vitesse de l'utilisateur dans la direction dudit noeud de réseau central.

5. Procédé selon la revendication 4, dans lequel ledit noeud de réseau central est un serveur de centre de commutation pour les services mobiles visité VMSC/MS.

6. Procédé selon une des revendications 4 ou 5, dans lequel ladite demande de service reçue en provenance dudit équipement d'utilisateur comprend un indicateur qu'un appel d'urgence est demandé.

7. Noeud de réseau d'accès radio adapté afin de déterminer une vitesse d'un équipement d'utilisateur comprenant
• des moyens pour déterminer une première position de l'équipement d'utilisateur,
• des moyens pour déterminer une seconde position de l'équipement d'utilisateur, **caractérisé par**
• des moyens pour déterminer la différence temporelle entre la détermination de la première localisation et la détermination de la seconde localisation et
• des moyens pour déterminer la vitesse de l'équipement d'utilisateur sur la base de la première localisation, la seconde localisation et la différence temporelle

8. Noeud de réseau d'accès radio selon la revendication 7, comprenant en outre
• Des moyens pour recevoir une demande de service en provenance d'un équipement d'utilisateur, et
• Des moyens pour recevoir en provenance d'un noeud de réseau central une demande de localisation comprenant une indication que l'information de vitesse de l'utilisateur est demandée.

9. Noeud de réseau d'accès radio selon la revendication 7 ou 8, comprenant en outre
• Des moyens pour acheminer le résultat de la localisation comprenant l'information demandée concernant la vitesse de l'utilisateur dans la direction dudit noeud de réseau central.

10. Noeud de réseau d'accès radio selon la revendication 7,8 ou 9, dans lequel ledit noeud d'accès radio est un contrôleur de réseau radio ou un contrôleur de station de base.
